# EUROPÄISCHE PATENTSCHRIFT

(11) **EP 0 389 859 B1**
(45) Veröffentlichungstag und Bekanntmachung des Hinweises auf die Patenterteilung: **02.06.1993**
(21) Anmeldenummer: 90104651.6
(22) Anmeldetag: 12.03.1990
(51) Int. Cl.: B65G 15/16, B65G 17/46, B67B 5/06

(54) **Anordung zum Transportieren von in einer Reihe von angeordneten Sektflaschendrahtbügeln**
Arrangement for transporting aligned champagne bottle wire cages
Dispositif pour transporter des muselets métalliques alignés de bouteilles de champagne

(30) Priorität: 31.03.1989 DE 3910383
(43) Veröffentlichungstag der Anmeldung: 03.10.1990
(73) Patentinhaber: Draht- und Metallwarenfabrik Phillip Schneider GmbH & Co., 55583 Bad Münster (DE)
(72) Erfinder: Niebling, Heinz, Dipl.-Ing., D-6552 Bad Münster-Ebernburg (DE)
(74) Vertreter: Quermann, Helmut, Dipl.-Ing.

(56) Entgegenhaltungen:
- DE-A- 1 432 359
- DE-A- 3 626 977
- DE-B- 1 195 669
- US-A- 4 406 359

## Beschreibung

Die Erfindung betrifft eine Anordnung zum Transportieren von in einer Reihe angeordneten Sektflaschendrahtbügeln.

Sektflaschendrahtbügel dienen dem Sichern von in Sektflaschen eingesteckten Sektkorken, sie sind in aller Regel als Bügelverschluß oder Vierdrahtverschluß ausgebildet. Üblicherweise werden die Sektflaschendrahtbügel in Automaten aus Blechbändern und/oder Drähten hergestellt, sie verlassen diese Herstellungsstation in ungeregeltem Zustand und erfahren erst anschließend eine geregelte Zusammenstellung, beispielsweise in Form einer Reihe.

Derartig gesammelte Sektflaschendrahtbügel werden so vom Hersteller in Behältnisse, insbesondere in Kartons, oder mittels tablettartiger Transporteinheiten, auf Paletten verpackt und an die Sekt produzierende Industrie vertrieben. Dort werden die Sektflaschendrahtbügel in aller Regel reihenweise aus den Behältnissen entnommen und eine Drahtbügelaufgabestation mit diesen beschickt, eine beispielsweise einer Verschließvorrichtung für die Flaschen zugeordnete Entnahmevorrichtung entnimmt einzeln die im Bereich der Drahtbügelentnahme station aufgestauten Drahtbügel und führt sie der Verschließvorrichtung zu, die in aller Regel mit der Füllvorrichtung für die Flaschen zusammenwirkt.

Eine derart arbeitende Vorrichtung ist beispielsweise aus der DE-OS 36 26 977 bekannt. In dieser ist eine an der Unterseite einen Elektromagneten aufweisende Greifeinrichtung beschrieben, die in eine Position oberhalb der in den Behältnissen angeordneten Sektflaschendrahtbügel verfahrbar und auf diese absenkbar ist und mit der bei Aktivierung des Elektromagneten jeweils eine Reihe von Sektflaschendrahtbügeln angehoben und zu einer parallel angeordneten Führungsbahn verfahren werden kann, die nach Ablage der Sektflaschendrahtbügel auf dieser aus der horizontalen Position in eine geneigte Stellung überführt wird, so daß die Reihe von Sektflaschendrahtbügeln zur Drahtbügelentnahmestation rutschen und damit die Entnahmevorrichtung einen Sektflaschendrahtbügel nach dem anderen der Verschließvorrichtung zuführen kann.

Bei der bekannten Vorrichtung ist zum Überführen der Sektflaschendrahtbügel eine räumliche Nähe zwischen der Drahtbügelaufgabestation und der Drahtbügelentnahmestation sowie der dieser zugeordneten Entnahmevorrichtung, die ihrerseits mit der Verschließvorrichtung zusammenwirkt, erforderlich. Es ist wegen der Übergabe der Sektflaschendrahtbügel mittels der Schräge praktisch nicht möglich, die Drahtbügelaufgabestation und die Drahtbügelentnahmestation weit beabstandet voneinander anzuordnen, geschweige denn die der Drahtbügelaufgabestation nachgeschaltete Drahtbügelentnahmestation oberhalb dieser.

Aus der US-A-4 406 359 ist eine Anordnung zum Transportieren von Gegenständen, insbesondere zylindrischen Behältnissen, von einem unteren zu einem oberen Niveau bekannt. Ein das Niveau überbrückendes, antreibbares, umlaufendes Transportband dient der Aufnahme der Gegenstände. Parallel beabstandet zum Transportband ist ein mit der gleichen Geschwindigkeit antreibbares, umlaufendes Transporthilfsband angeordnet, das sich über eine Teillänge des Transporthilfsbandes erstreckt, wobei die Laufrichtungen der zugewandten Bandabschnitte gleichgerichtet sind und der Abstand der Bandabschnitte so groß ist wie die Abmessung des jeweiligen Gegenstandes zwischen den Bandabschnitten. Das Transportband ist mit einer Vielzahl von Löchern versehen, die an Unterdruck gelegt sind, so daß die Gegenstände gegen das Transportband und das Transportband gegen dessen Transportauflage gezogen werden.

Aus der DE-B-1 195 669 ist eine Transporteinrichtung für flaches Fördergut bekannt. Diese weist ein antreibbares, umlaufendes Transportband zur Aufnahme des flachen Fördergutes auf. Parallel beabstandet zum Transportband ist ein umlaufendes ferromagnetisches Deckband angeordnet, das sich über eine Teillänge des Transportbandes erstreckt, wobei das Deckband über einen Teil seiner Länge durch das Kraftfeld von unter dem Transportband angeordneten Magneten hindurchgeführt wird. Diese bewirken, daß das über Umlenktrommeln antriebslos geführte und durch eine federbelastete Spannrolle unter einer bestimmten Zugspannung gehaltene Deckband das Fördergut auf das angetriebene Transportband preßt.

Es ist Aufgabe vorliegender Erfindung, eine Anordnung der genannten Art so weiter zu bilden, daß mit dieser Sektflaschendrahtbügel bei baulich einfacher Ausgestaltung der Anordnung über eine beliebig lange Transportstrecke, gegebenenfalls auch bei ansteigender Transportrichtung befördert werden können.

Die erfindungsgemäße Anordnung zum Transportieren der in einer Reihe angeordneten Sektflaschendrahtbügel ist gekennzeichnet durch ein antreibbares, umlaufendes Transportband zur Aufnahme der Sektflaschendrahtbügel, ein parallel beabstandet zum Transportband angeordnetes, antreibbares, umlaufendes Transporthilfsband, das sich über eine Teillänge des Transportbandes erstreckt, wobei die Laufrichtungen der zugewandten Bandabschnitte gleichgerichtet sind und der Abstand der Bandabschnitte mindestens so groß ist, wie die Abmessungen der Sektflaschendrahtbügel zwischen den Bandabschnitten, und auf der den Sektflaschendrahtbügeln abgewandten Seite des dem Transportband zugewandten Bandabschnittes des Transporthilfsbandes ein oder mehrere Magnete angeordnet sind.

Zunächst ermöglicht es die Verwendung eines Transportbandes als Fördermittel die Sektflaschendrahtbügel über eine beliebig lange Strecke zu befördern. Hierbei ist jedoch zu berücksichtigen, daß die Sektflaschendrahtbügel nur dann über unterschiedliche Höhenniveaus transportiert werden können, solange das Transportband ausreichend große Vorschubkräfte in die einzelnen Sektflaschendrahtbügel einleiten kann. Die Größe der Vorschubkräfte ist aber durch den Reibungskoeffizienten zwischen dem Transportband und den jeweiligen Sektflaschendrahtbügeln begrenzt, bei einer Förderung der Sektflaschendrahtbügel auf ein höheres Förderniveau ist darüber hinaus die Gewichtskomponente der Sektflaschendrahtbügel mit einzubeziehen, wobei diese aufgrund der Tatsache, daß die Sektflaschendrahtbügel aus Metall bestehen, erheblich ist. Um größere Vorschubkräfte in die Sektflaschendrahtbügel einleiten zu können,wirkt deshalb mit dem Transportband das Transporthilfsband zusammen, das die in Reihe angeordneten Sektflaschendrahtbügel bei Erreichen des Transporthilfsbandes über den oder die Magnete anzieht, so daß die Sektflaschendrahtbügel in Anlage mit dem dem Transportband zugewandten Bandabschnitt des Transporthilfsbandes gelangen und nunmehr von den Magneten angezogen ihre Vorschubkraft über das Transporthilfsband erfahren. Bei einer entsprechenden Länge des Magnete aufweisenden Bandabschnittes des Transporthilfsbandes können somit beliebige Vorschubkräfte in die Reihe von Sektflaschendrahtbügeln eingeleitet werden, womit beliebige Förderhöhen überbrückt werden können. Nach dem Transport der Sektflaschendrahtbügel durch den Zwischenraum zwischen Transportband und Transporthilfsband gelangen die Sektflaschendrahtbügel außer Eingriff mit dem Bandabschnitt des Transporthilfsbandes und damit auch aus dem Einfluß der Magnete, womit der weitere Transport der Sektflaschendrahtbügel ausschließlich über das Transportband erfolgt. Aufgrund der erfindungsgemäßen Anordnung können die Sektflaschendrahtbügel damit lückenlos transportiert werden, sei es in einer gleichbleibenden Ebene oder aber auf ein anderes Niveau. Vorrangig wird die erfindungsgemäße Anordnung Verwendung finden, um die Sektflaschendrahtbügel auf ein höheres Niveau zu transportieren, es ist aber auch ein Einsatz der Anordnung beim Überführen der Sektflaschendrahtbügel auf ein tieferes Niveau möglich, in diesem Fall ist es erforderlich, daß die Sektflaschendrahtbügel auf dem unteren Niveau abgebremst werden, was beispielsweise auch wieder durch die erfindungsgemäße Anordnung erfolgen kann, die bei entsprechend stark ausgebildeten Magneten die Fördergeschwindigkeit der Reihe von Sektflaschendrahtbügeln vorgibt. In diesem Zusammenhang wird es als vorteilhaft angesehen, wenn das Transportband nur aus horizontal und vertikal verlaufenden Bandabschnitten besteht, mit zwischen diesen Bandabschnitten befindlichen gekrümmten Bereichen und daß das Transporthilfsband dem horizontalen Bandabschnitt zugeordnet ist. Vertikale Bandabschnitte sind zweckmäßig mit parallel angeordneten Abdeckungen versehen, so daß die Sektflaschendrahtbügeln zwischen diesen Bandabschnitten und den Abdekkungen geführt werden können.

Gemäß einer besonderen Ausführungsform der Erfindung sind die Magnete als Permanentmagnete ausgebildet. Es sollten sich dabei mehrere Permanentmagnete über die Gesamtlänge des Bandabschnittes des Transporthilfsbandes erstrecken. Es liegt jedoch gleichfalls im Rahmen der vorliegenden Erfindung, andere Magnete, beispielsweise Elektromagnete vorzusehen. Unabhängig von der Art der verwendeten Magnete sollte angestrebt werden, daß die Magnete an dem Bandabschnitt des Transporthilfsbandes anliegen, womit bei entsprechend dünnwandigem Transporthilfsband bereits geringe magnetische Kräfte ausreichen, um die Sektflaschendrahtbügel sicher gegen den diesem zugeordneten Bandabschnitt des Transporthilfsbandes zu ziehen. Der Abstand der einander zugewandten Bandabschnitte von Transportband und Transporthilfsband sollte geringfüfig größer sein als die Abmessung der Sektflaschendrahtbügel zwischen den Bandabschnitten. Es ist hierdurch einerseits sichergestellt, daß die Sektflaschendrahtbügel komplikationslos in den Raum zwischen dem Transportband und dem Transporthilfsband eingeführt werden können, andererseits ist gewährleistet, daß die Sektflaschendrahtbügel von den Magneten sicher gegen den zugeordneten Bandabschnitt des Transporthilfsbandes gezogen werden können. In dieser Position werden die Sektflaschendrahtbügel vom Transportband abgehoben.

Das Transportband und das Transporthilfsband sollten so angetrieben sein, daß die Umlaufgeschwindigkeit des Transporthilfsbandes so groß oder größer ist als die des Transportbandes.

Bevorzugt stellt die Anordnung einen Teil einer Vorrichtung zum Überführen von Sektflaschendrahtbügeln von einer Drahtbügelaufgabestation zu einer Drahtbügelentnahmestation dar, wobei die Sektflaschendrahtbügel taktweise im Bereich der Drahtbügelaufgabestation auf das Transportband aufgesetzt und im Bereich der Drahtbügelentnahmestation vom Transportband taktweise entnommen werden, und die Geschwindigkeit des Transportbandes größer ist als die Fördergeschwindigkeit der Sektflaschendrahtbügel. Hierdurch wird trotz der taktweisen Aufgabe der Sektflaschendrahtbügel auf das Transportband bzw. deren taktweise Entnahme von diesem ein kontinuierlicher Förderverlauf geschaffen, wobei im vorbeschriebenen Sinne der lückenlose Transport der Sektflaschendrahtbügel über unterschiedliche Höhenniveaus möglich ist. In diesem Zusammenhang gesehen ist es selbstverständlich bekannt, Massengüter, wie beispielsweise Dosen, mittels eines Transportbandes zu fördern. Das Besondere der Weiterbildung der Erfindung ist aber im Unterschied hierzu darin zu sehen, daß es sich bei Sektflaschendrahtbügeln um Massengüter handelt, die ineinander gesteckt sind und taktweise aus der Drahtbügelaufgabestation ausgegeben werden und gleichfalls taktweise von der Drahtbügelentnahmestation manipuliert werden, bei gleichzeitiger kontinuierlicher Bewegung des Transportbandes. Um zu einem kontinuierlichen Produktionsfluß der Sektflaschen zu gelangen, muß daher die Geschwindigkeit des Transportbandes größer sein als die Fördergeschwindigkeit der Sektflaschendrahtbügel, die sich aufgrund deren Anstau im Bereich der Drahtbügelentnahmestation einstellt. Im Unterschied hierzu werden bei bekannten Verfahren zum Überführen von Massengüter die Massengüter mit der gleichen Geschwindigkeit bewegt wie das Transportband.

Das gemäß der Erfindung verwendete Transportband kann als umlaufendes Band ausgebildet sein, wobei unter dem Begriff Band sowohl ein einheitliches, durchgehendes Gebilde als auch eine Transportkette, insbesondere mit profilierter Gliedoberseite verstanden wird. Letztere findet insbesondere dann Verwendung, wenn konkave Krümmungen zu überbrücken sind. Bei dem Transporthilfsband wird es in aller Regel ausreichend sein, wenn dieses als einheitliches, durchgehendes Gebilde ausgebildet ist.

In den Figuren ist die Erfindung an einer Ausführungsform näher verdeutlicht, ohne auf diese beschränkt zu sein. Es zeigt:
- Figur 1: eine räumliche Ansicht eines Transportsystems zum Überführen von Sektflaschendrahtbügeln von einer Drahtbügelaufgabestation zu einer Drahtbügelentnahmestation, mit der erfindungsgemäßen Anordnung, in vereinfachter Darstellung,
- Figur 2: eine räumliche Ansicht eines Teiles des als Transportkette mit profilierter Gliedoberseite ausgebildeten Transportbandes, sowie dessen Lagerung- und Führungselemente,
- Figur 3: einen Schnitt gemäß der Linie III-III in Figur 1 und
- Figur 4: eine Ansicht IV gemäß Figur 1 des Transportsystems im konkaven Förderbereich.

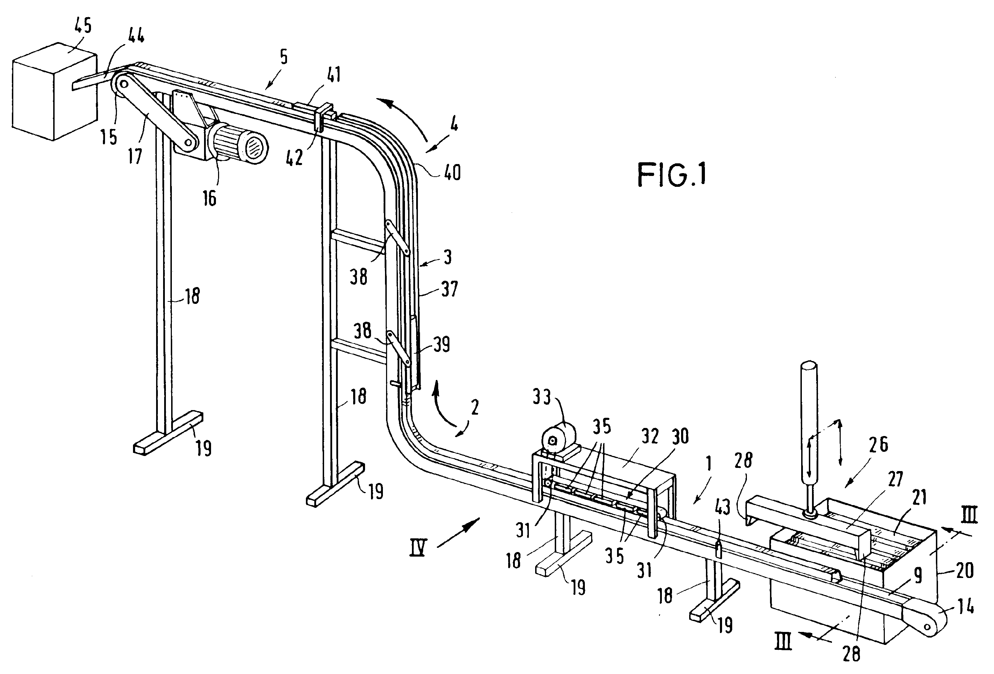

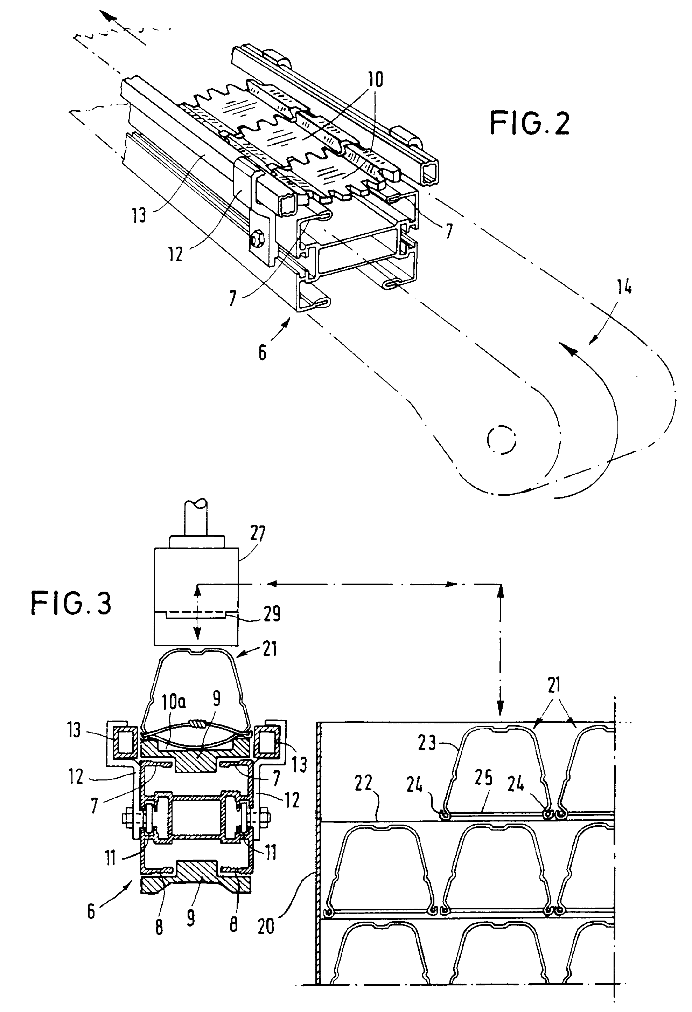

Das gezeigte Transportsystem dient zum Fördern von Sektflaschendrahtbügeln in Form von Bügelverschlüssen von einer unteren,waagerechten Ebene über ein senkrechtes Mittelstück zu einer oberen waagerechten Ebene, wobei der Transport mittels einer umlaufenden Transportkette erfolgt. So zeigt Figur 1 den unteren, waagerechten Führungsabschnitt 1,den sich an diesen anschließenden konkaven Führungsbogen 2, der in den senkrechten Führungsabschnitt 3 mündet, an letzteren schließt sich ein konvexer Führungsbogen 4 an, der sich in den oberen waagerechten Führungsabschnitt 5 fortsetzt. Die Ausbildung der Führungsabschnitte bzw. der Führungsbogen ist der Darstellung der Figuren 2 und 3 näher zu entnehmen, die ein H-förmiges Führungsprofil 6 mit auf die waagerechte Position der Führungsabschnitte bezogen oberen und unteren Gleitansätzen 7 bzw. 8 für die umlaufende Transportkette 9 zeigen. Die Transportkette 9 als solche besteht aus einzelnen Kettensegmenten 10 mit im Bereich der Gliedoberseite eingelassenen, rechteckigen Querschnitt aufweisenden Vertiefungen, wobei die Verschlußdrähte 25 der Sektflaschendrahtbügel 21 in Anlage mit den Bodenbereichen 10a der Vertiefungen gelangen und somit die Sektflaschendrahtbügel 21 mit zur Vertikalen geringfügig geneigter Stellung der Bügel 23 transportiert werden. Die Kettensegmente 10 weisen auf deren Bewegungsrichtung bezogen an ihrem vorderen und hinteren Ende ein Sägezahnprofil auf, das mit dem entsprechenden Profil des jeweils benachbarten Kettensegmentes 10 in Eingriff gelangt. Durch die Ausbildung der Kettensegmente 10 können mittels des Transportbandes unkompliziert Kurven in einer Ebene oder Übergänge von der Waagerechten zur Vertikalen und umgekehrt gefahren werden. Beidseitig weist das H-förmige Führungsprofil 6 sich in dessen Längsrichtung erstreckende Führungsnuten 11 auf, in denen Haltestege 12 befestigt sind, die beidseitig der auf den oberen Gleitansätzen 7 aufliegenden Transportkette 9 Führungsschienen 13 halten. Das Führungsprofil 6 als solches mit den seitlichen Führungsschienen 13 und die Ausbildung der einzelnen Kettensegmente 10 ist, mit Ausnahme der speziell profilierten Gliedoberseite, bekannt.

Das Fördersystem besitzt am Anfang des unteren waagerechten Führungsabschnittes 1 eine Umlenkeinheit 14 für die Transportkette 9, desgleichen am Ende des oberen waagerechten Führungsabschnittes 5 eine Umlenkeinheit 15. Unterhalb des oberen waagerechten Führungsabschnittes 5 ist ein elektromotorischer Antrieb 16 mit diesem befestigt der über eine Kette 17 eine in der Umlenkeinheit 15 angeordnete, nicht näher dargestellte Antriebswelle für die Transportkette 9 antreibt, wobei die Kettenlaufrichtung mit den in den konvexen und konkaven Abschnitten gezeigten Pfeilrichtungen übereinstimmt.

Das Transportsystem ist auf einem Traggestell gelagert, das aus einer Mehrzahl von Ständern 18 mit senkrecht zu diesen angeordneten Füßen 19 besteht.

Im Betrieb des Transportsystems läuft die Transportkette 9 mit gleichbleibender Geschwindigkeit um. Am Anfang des unteren waagerechten Führungsabschnittes 1 befindet sich seitlich neben diesem ein kistenförmiges Behältnis 20, beispielsweise ein Pappkarton, in dem mehrere Reihen von Bügelverschlüssen parallel zur Längserstreckung des Führungsabschnittes 1 nebeneinander auf einer Zwischenlage 22 angeordnet sind, die sich ihrerseits auf mehreren Lagen weiterer Bügelverschlüsse 21 mit dazwischen befindlichen Zwischenlagen 22 abstützt. Die Bügelverschlüsse 21 selbst weisen einen als Metallstreifen ausgebildeten Bügel 23 auf, der im Bereich seiner beiden Schenkelenden 24 mit Ösen versehen ist, die von Drahtringteilen 25 durchsetzt sind. Bei den im Behältnis 20 jeweils in einer Reihe angeordneten Bügelverschlüssen 21 sind die Bügel 23 im wesentlichen senkrecht orientiert und liegen dicht an dicht, während benachbarte Drahtringteile 25 der Bügelverschlüsse 21 im wesentlichen waagerecht orientiert, schuppenartig hintereinander zu liegen kommen.

Oberhalb des Behältnisses 20 ist eine Greifeinrichtung angeordnet, deren Greifarm 27 parallel zum unteren waagerechten Führungsabschnitt 1 ausgerichtet und in Richtung der in den Figuren 1 und 3 gezeigten Pfeile anheb- und absenkbar sowie seitlich zwischen dem Führungsabschnitt 1 und dem Behälter 20 hin- und herverfahrbar ist. Der Greifarm 27 wird an seinem vorderen und hinteren Ende 28 durch nach unten reichende keilförmige Ansätze 28 begrenzt, der lichte Abstand zwischen den Ansätzen 28 ist dabei so bemessen, daß zwischen diesen eine Reihe von Bügelverschlüssen 21 aufgenommen werden kann, wobei selbstverständlich die Längenerstreckung des Greifarmes 28 so bemessen ist, daß er in den Behälter 20 abgesenkt werden kann. An seiner Unterseite weist der Greifarm 27 einen Elektromagneten 29 auf. Zum Beschicken der Transportkette 9 mit Bügelverschlüssen 21 wird die Greifeinrichtung 26 mit dem Greifarm 27 über eine im Behälter 20 angeordnete Reihe von Bügelverschlüssen 21 verfahren und auf diese abgesenkt. Es wird dann der Elektromagnet 29 aktiviert, die Greifeinrichtung 26 angehoben, in eine Position oberhalb der Transportkette 9 verfahren und der Greifarm 27 mit den Bügelverschlüssen 21 so weit abgesenkt, bis diese auf der umlaufenden Transportkette 9 zu liegen kommen. Anschließend wird der Elektromagnet 29 reaktiviert und die Greifeinrichtung 26 wieder zum Behälter 20 verfahren, um diesem die nächste Reihe von Bügelverschlüssen 21 zu entnehmen, wobei an der Unterseite des Greifarmes 27 zusätzlich Saugnäpfe vorgesehen sein können, die nach dem Entfernen aller Bügelverschlüsse 21 von einer Zwischenlage 22 diese abheben und ablegen, bevor die auf der darunterliegenden Zwischenlage 22 befindlichen Reihen von Bügelverschlüssen 21 entnommen werden.

Auf die kontinuierliche umlaufende Transportkette 9 wird somit jeweils eine Reihe von Bügelverschlüssen 21 taktweise abgesetzt und von der Transportkette 9 abtransportiert. Aufgrund der relativ hohen Umlaufgeschwindigkeit der Transportkette 9 und der nachfolgend noch näher zu beschreibenden Widerstände, die von außen auf die auf der Transportkette 9 befindlichen Bügelverschlüsse 21 ausgeübt werden, stauen sich die Bügelverschlüsse 21 nach deren Ablage auf der Transportkette 9.

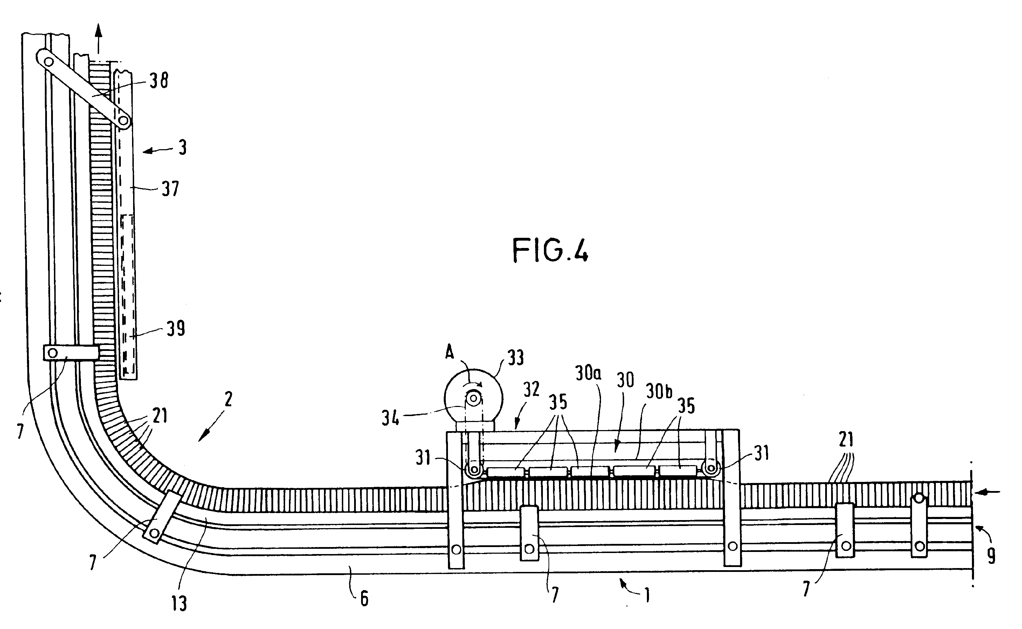

Kurz vor dem konkaven Führungsbogen 2 ist der Transportkette 9 des unteren waagerechten Führungsabschnittes 1 ein Transporthilfsband 30 zugeordnet. Dieses ist als in zwei Rollen 31 gelagertes,umlaufendes Band ausgebildet, mit parallel zum waagerechten Abschnitt der Transportkette 9 verlaufenden Bandabschnitten 30a und 30b. Die Rollen 31 sind in einem mit dem Führungsabschnitt 1 verbundenen Gestell 32 gelagert, die den konkaven Führungsbogen 2 zugewandte Rolle 31 ist darüber hinaus mittels eines auf dem Gestell 32 gelagerten Elektromotors 33 über einen Riemen 34 im Uhrzeigersinn gemäß Pfeilrichtung A in Figur 4 antreibbar. Bei angetriebenem Transporthilfsband 30 ist die Laufrichtung der Transportkette 9 und des dieser zugewandten Bandabschnittes 30a des Transporthilfsbandes 30 gleichgerichtet, der Abstand des Bandabschnittes 30b von der Transportkette 9 ist dabei geringfügig größer wie die vertikalen Abmessungen der Bügelverschlüsse 21 zwischen der Transportkette 9 und dem Bandabschnitt 30b. Zwischen den beiden Bandabschnitten 30a und 30b sind mehrere sich über die gesamte Länge zwischen den beiden Rollen 31 erstreckende Permanentmagnete 35 vorgesehen, die plattenförmig ausgebildet sind und an dem Bandabschnitt 30a anliegen, somit an der den Bügelverschlüssen 21 abgewandten Seite dieses Bandabschnittes 30a. Die Permanentmagnete 35 sind im Gestell 32 befestigt.

Das Transporthilfsband 30 wird über den Elektromotor 33 so angetrieben, daß dessen Umlaufgeschwindigkeit der Umlaufgeschwindigkeit der Transportkette 9 entspricht. Sobald die Bügelverschlüsse 21 in den Bereich des Transporthilfsbandes 30 gelangen, werden sie aufgrund der auf sie einwirkenden Magnetkraft der Permanentmagnete 35 oben gegen den Bandabschnitt 30a gezogen und haften an diesem. In diesem Stadium sind die Bügelverschlüsse 21 geringfügig von der Transportkette 9 abgehoben, was jedoch in der Darstellung der Figur 4 übertrieben dargestellt ist. Grundsätzlich ist anzustreben, daß der Abstand zwischen der Transportkette 9 und dem Bandabschnitt 30a des Transporthilfsbandes 30 so gewählt ist, daß die Bügelverschlüsse 21 ohne zu verkanten durch den zwischen der Transportkette 9 und dem Bandabschnitt 30a gebildeten Raum hindurchgeführt werden können, aber dennoch so gering ist, daß die Permanentmagnete 35 und damit auch der Bandabschnitt 30a in möglichst geringem Abstand von der oberen Begrenzung der Bügelverschlüsse 21 angeordnet sind. Aufgrund der geschilderten Ausbildung des Transporthilfsbandes 30 mit den Permanentmagneten 35 ergibt sich ein Kraftschluß zwischen dem Abschnitt 30a des Transporthilfsbandes bzw. den Permanentmagneten 35 und den Bügelverschlüssen 21 über die Gesamtlänge des Bandabschnittes 30a. Über diese Länge können somit Vorschubkräfte im Sinne der Transportrichtung der Transportkette 9 auf die weiter vorne angeordneten Bügelverschlüsse 21 ausgeübt werden, was ausreicht, um diese auf das höhere Niveau zu transportieren. Nach Passieren der dem konkaven Führungsbogen 2 zugeordneten Rolle 31 gelangen die Bügelverschlüsse 21 ausser Eingriff mit den Permanentmagneten 35, womit die davor befindliche Reihe von Bügelverschlüssen 21 wieder in Anlage mit der Transportkette 9 gelangt.

Der sich an den konkaven Führungsbogen 2 anschließende senkrechte Abschnitt 3 ist, wie insbesondere den Figuren 1 und 4 zu entnehmen ist, mit einer senkrechten Abdeckung 37 versehen, die gleichfalls über einen Bügel 38 im Führungsprofil 6 gelagert ist, der Abstand zwischen der durch den Bügel 38 fixierten Abdeckung 27 und der Transportkette 9 ist so bemessen, daß die Bügelverschlüsse 21 möglichst reibungsfrei vertikal zwischen den Teilen gefördert werden können. Zusätzlich ist die senkrechte Abdeckung 37 an ihrem unteren Ende mit mehreren Permanentmagnetstäben 29 versehen, die sicherstellen, daß die im vertikalen Bereich befindlichen Bügelverschlüsse 21 nicht mit ihrem vollen Gewicht auf die im konkaven Führungsbogen 2 befindlichen Bügelverschlüsse 21 einwirken. In diesem Zusammenhang ist es selbstverständlich, daß die über das Transporthilfsband 30 in die Bügelverschlüsse 21 eingebrachten Kräfte größer sein müssen wie die Gewichtskräfte der Bügelverschlüsse 21 im vertikalen Abschnitt und gegebenenfalls auch der Einfluß der Permanentmagnetstäbe 39 zu berücksichtigen ist.

Der sich an den senkrechten Führungsabschnitt 3 anschließende konvexe Führungsbogen 4 ist mit einer entsprechenden konvex ausgebildeten Abdeckschiene 40 versehen. Im Anschluß an die konvexe Kurve schließt sich im oberen waagerechten Führungsabschnitt 5 der Förderkette 9 ein Elektromagnet 41 an, der in geringfügigem Abstand von der oberen Begrenzung der Bügelverschlüsse 21 in einem Bügel 42 gehalten ist, der seinerseits mit dem Führungsprofil 6 verbunden ist. Der Elektromagnet 41 wird von einem Sensor 43 angesteuert, der vor dem in der unteren Ebene befindlichen Transporthilfsband 30 angeordnet ist, der Sensor 43 und der im oberen Bereich angeordnete Elektromagnet 41 dienen dem Zweck, den konkaven und konvexen Führungsbogen 2 bzw. 4 sowie den senkrechten Führungsabschnitt 3 stets lückenlos mit Bügelverschlüssen 21 belegt zu halten. So führt eine Unterbrechung der Zufuhr von Bügelverschlüssen 21 mittels der Greifeinrichtung 26 dazu, daß der Sensor 43 aktiviert wird, der seinerseits den Elektromagneten 41 beaufschlagt, die Kraft des Elektromagneten 41 ist dabei so bemessen, daß bei dessen Aktivierung kein Vorschub der Bügelverschlüsse 21 mittels des in der unteren Ebene befindlichen Transporthilfsbandes 30 möglich ist und damit nur die in Förderrichtung hinter dem Elektromagneten 41 befindlichen Bügelverschlüsse 21 weiter befördert werden können.

Schließlich ist im Bereich der Umlenkeinheit 15 eine Rutsche 44 mit U-förmigem Querschnitt angeordnet, auf die die Bügelverschlüsse 21 in Reihe verbracht werden, so daß sie in eine in Figur 1 als Black-Box gezeigte Entnahmestation 45 gelangen, in der in bekannter Art und Weise mittels einer Zangenabteilung jeweils der erste Bügelverschluß von den nachfolgenden separiert und einer Verschließvorrichtung zugeführt wird.

Die zuvor geschilderte Erfindung ist nicht auf den Transport von Sektflaschendrahtbügeln in Form von Bügelverschlüssen beschränkt. Es besteht genauso die Möglichkeit, anders gestaltete Sektflaschendrahtbügel, beispielsweise Vierdrahtverschlüsse zu transportieren, bei diesen ist jedoch davon auszugehen, daß die einzelnen Verschlüsse ineinandergesteckt liegend auf der Transportkette 9 befördert werden, das heißt es wären in diesem Fall die Drahtringteile 25 im wesentlichen senkrecht orientiert. Die Erfindung ist darüber hinaus nicht auf das Fördern von Sektflaschendrahtbügeln von einer unteren Ebene auf eine obere Ebene beschränkt, sie kann gleichwohl in vereinfachter Ausbildung Anwendung finden für einen Transport von einer oberen Ebene in eine untere Ebene oder sogar bei einem Transport in einer Ebene.

## Patentansprüche

1. Anordnung zum Transportieren von in einer Reihe angeordneten Sektflaschendrahtbügeln,
**gekennzeichnet** durch ein antreibbares, umlaufendes Transportband (9) zur Aufnahme der Sektflaschendrahtbügel (21), ein parallel beabstandet zum Transportband (9) angeordnetes antreibbares, umlaufendes Transporthilfsband (30), das sich über eine Teillänge des Transportbandes (9) erstreckt, wobei die Laufrichtung der zugewandten Bandabschnitte (9, 30a) gleichgerichtet sind und der Abstand dieser Bandabschnitte (9, 30a) mindestens so groß ist wie die Abmessungen der Sektflaschendrahtbügel (21) zwischen den Bandabschnitten (9, 30a), und auf der den Sektflaschendrahtbügeln (21) abgewandten Seite des dem Transportband (9) zugewandten Bandabschnittes (30a) des Transporthilfsbandes (30) ein oder mehrere Magnete (35) angeordnet sind.

2. Anordnung nach Anspruch 1, **dadurch gekennzeichnet**, daß das Transportband horizontal und vertikal verlaufende Bandabschnitte (1, 5; 3) aufweist und das Transporthilfsband (30) dem ersten horizontalen Bandabschnitt (1) zugeordnet ist.

3. Anordnung nach Anspruch 1 oder 2, **dadurch gekennzeichnet**, daß die Magnete als Permanentmagnete (35) ausgebildet sind.

4. Anordnung nach Anspruch 3, **dadurch gekennzeichnet**, daß mehrere Permanentmagnete (35) über die Gesamtlänge des Bandabschnittes (30a) des Transporthilfsbandes (30) angeordnet sind.

5. Anordnung nach einem der Ansprüche 1 bis 4, **dadurch gekennzeichnet**, daß der oder die Magnete (35) an dem Bandabschnitt (30a) des Transporthilfsbandes (30) anliegen.

6. Anordnung nach einem der Ansprüche 1 bis 5, **dadurch gekennzeichnet**, daß der Abstand der einander zugewandten Bandabschnitte (9, 30a) von Transportband (9) und Transporthilfsband (30) geringfügig größer ist als die Abmessungen der Sektflaschendrahtbügel (21) zwischen den Bandabschnitten (9, 30a).

7. Anordnung nach einem der Ansprüche 1 bis 6, **dadurch gekennzeichnet**, daß die Umlaufgeschwindigkeit des Transporthilfsbandes (30) so groß ist wie die des Transportbandes (9).

8. Anordnung nach einem der Ansprüche 1 bis 6, **dadurch gekennzeichnet**, daß die Umlaufgeschwindigkeit des Transporthilfsbandes (30) größer ist als die des Transportbandes (9).

9. Anordnung nach einem der Ansprüche 1 bis 8, **dadurch gekennzeichnet**, daß das Transportband (9) und das Transporthilfsband (30) kontinuierlich angetrieben werden.

10. Anordnung nach einem der Ansprüche 1 bis 7, 9,**dadurch gekennzeichnet**, daß die Anordnung Teil einer Vorrichtung zum Überführen von Sektflaschendrahtbügeln (21) von einer Drahtbügelaufgabestation (26) zu einer Drahtbügelentnahmestation (45) darstellt, wobei die Sektflaschendrahtbügel (21) taktweise im Bereich der Drahtbügelaufgabestation (26) auf das Transportband (9) aufgesetzt und im Bereich der Drahtbügelentnahmestation (45) taktweise entnommen werden, und die Geschwindigkeit des Transportbandes (9) größer ist als die Fördergeschwindigkeit der Sektflaschendrahtbügel (21), bedingt durch einen Anstau der Sektflaschendrahtbügel (21) verursacht durch in den Bewegungsweg der Sektflaschendrahtbügel (21) eingebrachte Widerstände.

## Claims

1. Arrangement for transporting champagne bottle wire muzzles arranged in a row, characterised by a powered, revolving conveyor belt (9) for receiving the champagne bottle wire muzzles (21), an auxiliary, powered, revolving conveyor belt (30) positioned parallel to the conveyor belt (9), which extends over a partial length of the conveyor belt (9), the direction of travel of the facing belt sections (9, 30a) being the same and the distance between these belt sections (9, 30a) being at least as great as the dimensions of the champagne bottle wire muzzles (21) between the belt sections (9, 30a), and one or more magnets (35) are placed on the side away from the champagne bottle wire muzzles (21) of the belt section (30a) facing the conveyor belt (9) of the auxiliary conveyor belt (30).

2. Arrangement according to claim 1, characterised in that the conveyor belt has belt sections (1, 5; 3) which run horizontally and vertically and the auxiliary conveyor belt (30) is associated with the first horizontal belt section (1).

3. Arrangement according to claim 1 or 2, characterised in that the magnets are permanent magnets (35).

4. Arrangement according to claim 3, characterised in that a plurality of permanent magnets (35) are placed over the whole length of the belt section (30a) of the auxiliary conveyor belt (30).

5. Arrangement according to one of claims 1 to 4, characterised in that the magnet or magnets rest against the belt section (30a) of the auxiliary conveyor belt (30).

6. Arrangement according to one of claims 1 to 5, characterised in that the distance between the facing belt sections (9, 30a) of the conveyor belt (9) and the auxiliary conveyor belt (30) is slightly greater than the dimensions of the champagne bottle wire muzzles (21) between the belt sections (9,30a).

7. Arrangement according to one of claims 1 to 6, characterised in that the rotational speed of the auxiliary conveyor belt (30) is as great as that of the conveyor belt (9).

8. Arrangement according to one of claims 1 to 6, characterised in that the rotational speed of the auxiliary conveyor belt (30) is greater than that of the conveyor belt (9).

9. Arrangement according to one of claims 1 to 8, characterised in that the conveyor belt (9) and the auxiliary conveyor belt (30) are driven continuously.

10. Arrangement according to one of claims 1 to 7, 9, characterised in that the arrangement represents part of a device for transferring champagne bottle wire muzzles (21) from a wire muzzle on-loading station (26) to a wire muzzle off-loading station (45), the champagne bottle wire muzzles (21) being placed in cycles onto the conveyor belt (9) in the area of the wire muzzle on-loading station,(26) and removed in cycles in the area of the wire muzzle off-loading station (45), and the speed of the conveyor belt (9) being greater than the conveying speed of the champagne bottle wire muzzles (21), depending on an accumulation of the champagne bottle wire muzzles (21), caused by resistors placed in the moving path of the champagne bottle wire muzzles (21).

## Revendications

1. Dispositif pour transporter des muselets métalliques alignés, de bouteilles de champagne, caractérisé par une bande transporteuse (9) continue, entraînée, pour recevoir les muselets (21), une bande auxiliaire de transport (30), continue, entraînée, disposée parallèlement à la bande de transport (9), cette bande auxiliaire s'étendant sur une fraction de la longueur de la bande de transport (9), les sens de circulation des segments de bande (9, 30a) tournés l'un vers l'autre étant les mêmes et la distance séparant ces parties de bande (9, 30a) étant au moins égale aux dimensions des muselets (21) entre les segments de bande (9, 30a), et un ou plusieurs aimants (35) sont prévus sur le côté de la partie (30a) de la bande auxiliaire (30) tournée vers la bande de transport (9) et opposée au muselet (21).

2. Dispositif selon la revendication 1, caractérisé en ce que la bande de transport comporte des parties de bande (1, 5, 3) circulant dans la direction horizontale et dans la direction verticale, et la bande auxiliaire (30) est associée à la première partie horizontale de bande (1).

3. Dispositif selon la revendication 1 ou 2, caractérisé en ce que les aimants sont des aimants permanents (35).

4. Dispositif selon la revendication 3, caractérisé par plusieurs aimants permanents (35) répartis sur toute la longueur du premier segment (30a) de la bande auxiliaire (30).

5. Dispositif selon l'une des revendications 1 à 4, caractérisé en ce que le ou les aimants (35) sont appliqués contre le segment (30a) de la bande auxiliaire (30).

6. Dispositif selon l'une des revendications 1 à 5, caractérisé en ce que les segments en regard (9, 30a) de la bande de transport (9) et de la bande auxiliaire (30) sont légèrement supérieurs aux dimensions des muselets (21) entre les segments (9, 30a).

7. Dispositif selon l'une des revendications 1 à 6, caractérisé en ce que la vitesse de circulation de la bande auxiliaire (30) est égale à celle de la bande de transport (9).

8. Dispositif selon l'une des revendications 1 à 6, caractérisé en ce que la vitesse de circulation de la bande auxiliaire (30) est supérieure à celle de la bande (9).

9. Dispositif selon l'une des revendications 1 à 8, caractérisé en ce que la bande (9) et la bande auxiliaire (30) sont entraînées en continu.

10. Dispositif selon l'une des revendications 1 à 7, 9, caractérisé en ce qu'il constitue une partie d'un dispositif pour transférer les muselets (21) d'un poste d'entrée de muselets (26) jusqu'à un poste de sortie de muselets (45), les muselets (21) étant placés en cadence sur la bande de transport (9) au niveau du poste d'entrée (26) et les muselets sont repris en cadence au niveau du poste de sortie (45), la vitesse de la bande de transport (9) étant supérieure à la vitesse de transfert des muselets (21), ce qui est provoqué par une accumulation de muselets (21) engendrée par les pertes de charge créées dans le chemin de déplacement des muselets (21).
